# EUROPEAN PATENT APPLICATION

(11) **EP 4 215 332 A1**
(43) Date of publication of application: **26.07.2023**
(21) Application number: 22152782.3
(22) Date of filing: 21.01.2022
(51) Int. Cl.: B29B 17/02, B29B 17/04, B29L 31/00

(54) **METHOD FOR RECYCLING AND STERILIZING THERMOPLASTICS FROM PRODUCTS HAVING SAME HETEROGENOUS COMPOSITION, AND INSTALLATION FOR IMPLEMENTING SUCH METHOD**

(71) Applicant: Sartorius Stedim Biotech GmbH, 37079 Göttingen (DE)
(72) Inventor: BARBAROUX, Magali, 13112 LA DESTROUSSE (FR); ENDRES, Hans Josef, 30890 BARSINGHAUSEN (DE); POLLARD, David, SOUTH BOSTON, MA 02127 (US); REIF, Oscar, 30173 HANNOVER (DE)
(74) Representative: Derambure Conseil

(57) **Abstract**

Different types of plastics (4, 7, 10), present in biologically contaminated products (20) of heterogenous composition, are separated based on specificities regarding melt viscosity and/or melting temperature, preferably using at least one melt filter. In a pre-processing unit (50), the solid products are subjected to size reduction, to obtain size-reduced parts (2). After heating of at least the plastic materials contained in the size-reduced parts, a molten mixture is obtained, including two types of plastics having specific melt viscosities and/or melting temperatures that are different. Then, in a separation equipment typically including an extruder, at least one of the two types of plastics is selectively separated from the molten mixture, as unfiltered part relative to a melt filter, the unfiltered part essentially or only containing a type of polymer that is sterilized, preferably due to said heating, and collected in a collection container (5, 8, 11).

## Description

### FIELD OF THE INVENTION

The disclosure relates to the recycling of products of heterogeneous composition, for instance healthcare products, including thermoplastics or similar plastic materials. More particularly, the disclosure relates to a method for the separation and recovery of thermoplastic plastic materials from complex products, and an installation for implementing such recycling method.

### BACKGROUND OF THE INVENTION

Plastics are a high-quality energy-containing material. For efficient and quality recycling of plastics, it is desirable to have plastics that are as pure as possible and suitable for processing in a plastics processing plant. So far, no solution has been considered as efficient and of interest economically when considering discarded products having a heterogenous composition.

In many products, different plastics have been inseparably combined for sake of improving performance/function. Examples of such products are packaging/housings including multilayer films, which may consist of 6 or 8 (or even more) different plastics, or textiles, in which mixed fabrics are often used, possibly with an additional coating. In addition, many polymer materials are plastic mixtures, in which different polymers are mixed with each other on a microstructural level, in order to optimize processing and application properties.

Some plastic products, chemically complex and/or combining several components or functions, cannot be easily recycled. When such products have a structure including reinforcing components, fillers, adhesives, paper or plastic laminates, recycling of the plastics is not considered satisfactory. Typically, medical products contain a variety of plastic materials and form a very heterogeneous structure, which makes it difficult to recycle and produce a homogenous given type of plastic material.

Clearly, there is a need to develop processing and recycling methods that can value complex products after use, which are typically contaminated products due to contact with fluid, bacteria, or the like. Currently, such products that include a plurality of plastics are incinerated, which means plastics are not reused. It would be of interest obtaining recycled plastic that remains suitable for hygienic applications since there is an increasing need for polymers, at least for sterile plastic products in healthcare applications.

According to the disclosure, a purpose is to improve the recycling of certain types of products having plastics or mixtures of plastics therein, for instance healthcare products that have been contaminated. One objective is to obtain plastic recyclates of the purest possible type from waste and mixed materials.

### OBJECTS AND SUMMARY OF THE INVENTION

For improving situation, embodiments of the invention provide a method of separating different types of plastics from a plurality of products of heterogenous composition, the products having different types of plastics distributed in several product pieces assembled together in each of the products, the method comprising:
- supplying the plurality of products to a pre-processing unit, with each of the products composed of several materials, the plurality of products being solid products contaminated due to contact with a biopharmaceutical fluid, each of the products having two types of plastics that consist of a first polymer and a second polymer, each melt-flowable;
- in the pre-processing unit, subjecting the products to size reduction, to obtain size-reduced parts;
- heating at least the plastic materials contained in the size-reduced parts to obtain a molten mixture including the two types of plastics, the heating starting before, during and/or after the size-reduction;
   wherein the two types of plastics have specific melt viscosities and/or melting temperatures that are different,
   wherein after the size-reduction, the method comprises:
- supplying the molten mixture to a separation equipment;
- selectively separating from the molten mixture at least one of the two types of plastics, by using a melt filter included in the separation equipment;
and wherein an unfiltered portion retained by/not passing through the melt filter, containing at least one of the two types of plastics, is sterilized, preferably due to said heating, and collected in a collection container.

The heating may be performed beyond a sterilization temperature threshold, for instance of about 121 or 122°C and/or is performed to have sterilization results in at least a log 6 kill factor (when analysing the separated polymers). The first and/or the second polymers may be obtained quickly, without any need for separating othe plastics that are inclided in a typically less viscous molten portion flowing through the one or more melt filters of the separation equipment.

When ensuring that metal parts or some materials difficult to molten are not present or can easily be separated in the pre-processing unit (for instance, metal pieces may be magnetically retained), the outcome retrieved in the collection container may be a clean material that can be re-used in widespread applications.

Thanks to such method, a mechanical recycling may be performed at least for the first polymer and/or the second polymer. Recycling also allows efficient decontamination process. Such mechanical recycling may be less energy intensive than chemical recycling. Chemical recycling typically needs more energy and produces more CO₂ emissions.

In some options, apart the first and/or the second polymers, chemical degradation may be involved, possibly with increase of temperature downstream the melt filter.

Optionally, only one of the two types of plastics is retained in a first unfiltered molten portion, by using a first melt filter of the separation equipment, the collection container being a first collection container for collecting the first unfiltered molten portion.

Alternatively, the two types of plastics are forming a blend in a first unfiltered molten portion, by using a first melt filter of the separation equipment.

Preferably, the separation equipment is provided with an extrusion line. One or melt filters may be mounted in the extrusion line, allowing extracting and collecting of a part of the molten mixture that is more viscous.

According to an advantageous embodiment of the invention, it is provided that the filter stages, preferably all the filter stages of the separation equipment, are operated within an extrusion plant.

In preferred embodiments, using a melt filter mounted in a given section of an extrusion line, a polyolefin is separated from a molten portion that flows in a downstream section (downstream the given section) of an extrusion line.

The pre-processing unit may allow size reduction by directly processing the contaminated products. The size-reduction step may be performed by shredding, milling, grinding, chipping, granulating, or combinations thereof. An agglutination step may also be involved

In some embodiments, after the size-reduction, the method comprises selectively separating from the molten mixture the two types of plastics (allowing selective collection of the first polymer and the second polymer), using melt filters of the separation equipment. Typically, the method is adapted to firstly separate the first polymer and then separate the second polymer, with the first polymer and the second polymer being sterilized.

The types of plastics may be incompatible polymers, for instance immiscible polymers.

The products may be selectively chosen amongst a given category of solid devices having a same heterogeneous composition with a plastic part, the plastic part only comprising polymers that are immiscible at a temperature of about 100°C. Preferably, the immiscible polymers are able to be contained in same melt part/molten mixture, which is a melt-flowable part. Typically, the polymers to be retrieved remain in respective phases or areas in the extrusion line.

Thanks to such method, at least one unfiltered polymer with good purity can be obtained. Should such recycled plastic be used against for food contact application, healthcare application or the like, it may be worth mixing such recycled polymer with fresh polymer of the same type. Improvement of mechanical and thermal properties can be reached with a blend comprising 30-90%, preferably 40-80%, recycled polymer and a complementary fraction of virgin polymer, thus allowing such valuable applications (especially food contact applications or medical applications).

Typically, at least two different plastics may be retrieved from several complex products, with a decontaminating effect, using an extrusion line, preferably with cascade filtration using melt viscosity as main parameter for separation of the polymers.

In a preferred option, several melt filters may be used, the method involving different filtering steps that are preferably operated within a same extrusion equipment/extruder. This allows a simple and cost-effective implementation of a recycling plant.

Typically, only the melt filters need to be supplemented or adapted to the desired specific melt viscosity of the plastic types to be separated.

According to a feature, a cascade separation is performed, to successively obtain separated molten polymeric part downward a melt filter, while unfiltered part constitutes the separated part, preferably using the extrusion equipment. Typically, two melt filters can be arranged each in a filter assembly comprising at least an outlet for one amongst the first and second polymers, which correspond to respective unfiltered parts, and a drain port forming a flow path for the flowable polymeric part/filtered part of lower viscosity as compared to higher viscosity of the polymer obtained at the outlet.

Each filtered part may be circulated toward a next melt filter, preferably involving a comparatively lower temperature. Decrease of temperature, using an extrusion line, is of interest because only the molten material with comparatively lower viscosity is received in a filter chamber, at each stage: this means that clogging issues cannot easily appear, at least for the last filters in the cascade, provided the polymers have sufficiently different melting temperatures and/or different melt viscosities.

With such a way of separating the respective thermoplastic polymers, this prevents or limits clogging issues in the filter chamber of the melt filter used at each stage. Possibly, the melt filters may be of simple design and/or with better efficiency of anti-clogging systems (for instance perforated head pistons or the like, provided adjacent to the filter element involved in the melt filter).

Use of melt filters, performing with different viscosity levels, is of interest for improved polymer recycling, as it ensures that the melt stream is suitably clean and free of contaminants. Besides, a relatively simple preliminary separation stage may be easily provided, in order to selectively remove other rigid non-plastic materials from the mixture to be heated at high temperature for the first melt filter. Melt filtration may ensure that the melt stream is suitably clean and free from contaminants such as paper, metals, wood, foreign plastics, glass, dust particles, and unmelted or degraded polymer formations).

Use of double-piston screen changers may be preferred to allow continuous operation and have a high cleaning capacity, should quantity of contaminated matters be important in the products.

The products typically have same functions, possibly being structurally identical, and/or are constructed by the same manufacturer. The plastics may have same origin due to identical manufacturing process.

In a first embodiment, all materials belonging to the products are at a molten state, with different viscosities. Filtering steps are successively performed, using a cascade of melt filters, for selectively retrieving the types of plastics (polymers) that can be recycled for further use.

In a slight variant, a metal part of the products is removed before a heating step to obtain a molten state for all the other materials/constituents of the products, which are plastic constituents. Filtering steps are successively performed, using a cascade of melt filters, for selectively retrieving the types of plastic constituents (polymers) that can be recycled for further use.

In a second embodiment, at least one material belonging to the products is/remains unmolten, while the other materials are reaching a downward area of a given filter. The unmolten part is retrieved and may only include a same type of plastic chosen amongst the two types of plastics. Typically, temperature is raised, possibly before the given filter or at a later stage, so that all or part of the other materials are degraded. For instance, a change of the chemical properties occurs for two or more of the other materials having a lower viscosity as compared to the unfiltered/separated material. The material that remains unmolten, separated upstream from a filter element of the given filter, is selectively recycled.

In a third embodiment, at least two of the materials belonging to the products can't be filtered in a same filtration step. Then the mix of the unfiltered materials is characterized as a blend for further use in new application(s). The blend that remains unmolten, separated upstream the filtering part at the filtration step, is selectively recycled. In some options, depending on the properties of the other materials remaining in the molten part (reaching the downward area in the filtration step), a further separation is performed by separating from the material mixture one or more types of plastic contained in the molten portion on the basis of the specific melt viscosity of each type of molten plastic.

According to an embodiment, the products fed to the pre-processing unit are provided with a plastic housing, preferably flexible, and/or include metal or mineral parts arranged inside the plastic housing.

Typically, the method may comprise:
- in the pre-processing unit, shredding plastic parts of the plastic housing, so that the metal or mineral pieces can be handled/collected separately from the shredded plastic parts (early collection in the process, ferrous and non-ferrous metal contamination is removed from the waste plastic, for instance using magnetic separators and/or Eddy current separators ECS); and
- removing of metal or mineral parts by magnetic separation, preferably before obtaining the (preferably sterilized) molten mixture.

In various embodiments of the separation method, one and/or the other of the following particulars may possibly also be employed, separately or in combination:
- temperature is set equal or above a sterilization threshold, in an extrusion equipment, for at least one amongst the first polymer and the second polymer, preferably for all the polymers to be collected.
- the products are plastic products each containing the first polymer, the second polymer and a third polymer.
- the products include each a multilayer plastic film (of same composition for each of the products), forming a plastic housing.
- the first polymer and/or the second polymer are distributed in each product to define a layer of the multilayer plastic film.
- all the plastics contained in the products have been selected to have different melting temperatures and/or different melt viscosities.
- at least three melt filters of the separation equipment allow separating, by a mechanical process using a melting temperature differential or melt viscosity differential between the different plastics, the first polymer, the second polymer and the third polymer.
- at least three melt filters of the separation equipment allow separating, by a mechanical process using a melting temperature differential between the different plastics, the first polymer, the second polymer and the third polymer.
- the third polymer is of lower melt viscosity than the first polymer and the second polymer, the third polymer being separated after separating the second polymer.
- there is a melting temperature difference of at least 15°C between any of the different types of plastics present in the products.
- there is a difference in average molecular weight of at least 1500 g/mol, preferably at least 2000 g/mol (or at least 3000 g/mol), between any of the different types of plastics present in the products.
- one amongst the first polymer and the second polymer is a type of Polypropylene (PP).
- one amongst the first polymer and the second polymer is a type of Polyethylene (PE), preferably LLDPE (Linear Low Density Polyethylene).
- one amongst the first polymer, the second polymer and the third polymer is a type of Polyamid (PA), preferably PA6.
- the products contain a type of PTFE and/or a type of PET.
- the first polymer has higher melt viscosity than any one of the other plastics contained in the molten mixture.
- the molten mixture obtained by the heating is already a sterilized mixture, preferably before any separation in a filter stage of the separation equipment.
- a homogenization unit is arranged downstream from a given melt filter chosen amongst the melt filters, the temperature in the homogenization unit being preferably higher than in the given melt filter.
- an increase in temperature is also performed for a given polymer to be collected in a collection container, at an intermediary section between a melt filter and the associated collection container, the temperature in the intermediary section being preferably superior or equal to 121°C.
- a control means is provided which can regulate the temperatures in each homogenization unit (accordingly, the temperature can be set as required anywhere in the processing chain).

According to an advantageous embodiment, the molten portion passing a melt filter is supplied to a next filtration stage. In other words, at least the molten portion of the material mixture passes successively through different filtration stages, each filtration stage, with at least one melt filter, being designed to separate the molten, low viscosity and unmelted or higher viscosity portions of the material mixture within a specific viscosity range.

In each filtering step (i.e. at each filtration stage), the respective type of plastic with the highest melt viscosity is separated from the melt portion of the material mixture. According to an advantageous embodiment, it is provided that several or all types of plastics contained in the melt portion of the material mixture are separated individually based on the specific melt viscosity of the respective type of molten plastic. In this context, the individual viscosities or viscosity differences of the components to be separated can also be specifically influenced in each case by means of the other methods described below by way of example. This physical, mechanical or chemical spreading of the viscosity makes it possible to separate or sort the types of plastic. This has the advantage that the types of plastic are completely separated according to their nature. In this way, the best possible recycling quality can be achieved.

Advantageously, separation of the different types of plastic is allowed with a manageable technical effort. In particular, the filtration stages can be implemented using industrially available melt filters. Depending on the filtration stage, the melt filters can be set to different viscosity limit values, adapted to the specific melt viscosity of the plastic type to be separated.

The different viscosities or viscosity differences can be adapted to the respective filters. That is, after each separation, a change in the melt viscosity of one or more types of plastic can take place by chemical, physical or mechanical influence of the materials, such as generation of pressure or shear profiles assigned to the types of plastic, addition of melt viscosity changing components, variation of the temperature profile, variation of the filter stage, etc.

According to a particular feature, the plurality of products that are supplied to the pre-processing unit are assembled products with no part thereof removed before the subjecting to size reduction.

Such way of directly supplying products without disassembling or sorting of components is of interest to prevent complex disconnecting operations. Usually, disconnecting and sorting of different parts can't be easily achieved either because some of the components can't be disconnected by design (a permanent connection is required for instance to resist to pressure inside a filter plastic cartridge) or because the disconnection and sorting of post use products can be considered as hazardous, for instance in view of the fluid or particles introduced in the product.

According to a particular option, each polymer found in composition of the products is selected to:
- 1- fulfill at least one given application specification chosen amongst air or liquid sterilizing filtration, pre-use sterilization and integrity testing, and
- 2- be compatible with separation by a melt filter, while being melt-flowable in an extrusion line.

According to a further aspect, a group of products, typically same products (preferably with same heterogenous composition) is provided, which is adapted to be subjected to recycling by the method according to the disclosure. In such group, the products have same functions and same structure, while all being of a given heterogenous composition including same types of plastics distributed in several product pieces assembled together in each of the products, wherein at least two or three polymers amongst said types of plastics are sterilizable melt flowable polymers having specific melt viscosities that are different and allowing separation by use of melt filters,
and wherein there is a melting temperature difference, for instance a difference of at least 15°C; between the respective polymers that can be collected as unfiltered part in a filter stage with melt filter(s).

Optionally, there is a difference in melting temperature of at least 15°C, preferably at least 20°C, between any one of the three polymers and any other type of plastic also present in the products. Additionally, or alternatively, there is a difference in average molecular weight of at least 1500 or 2000 g/mol, between any one of the three polymers and any other type of plastic also present in the products.

In some options, the products contain a polyolefin, a condensation polymer and at least one amongst cellulose acetate, EVA and EVOH.

The materials in the products, for instance filters or pouches for biopharmaceutical fluid (already used), have been selected to have intrinsically different parameters, for instance melting temperatures. Such different parameters may have impact in flowability through a melt filter for given conditions (local temperature, local pressure), so that the differential in such parameters will allow each of the types of plastic, even if contaminated with biopharmaceutical fluid (already used filtering devices), to be recycled in a mechanical process. For instance, the differential in the parameters (differential in melting temperature or other differential) is significant between the different components to facilitate separation of the different materials.

Advantageously, the design of healthcare products or similar products is compatible with many of the healthcare usual requirements, including integrity test and/or gamma sterilization, while allowing retrieving of the polymers already decontaminated.

According to another aspect, there is a need for an installation for extraction and selective separation of some plastic, especially polymers, from complex products that have been contaminated (biologically contaminated, typically due the single use application thereof).

This installation, for implementation of a method such as above described, typically comprises only mechanical processing parts, with one or more heating elements belonging to a sterilizer to sterilize the molten mixture obtained at an output of a first mechanical processing part involved in the size-reduction, while the separation equipment allowing selective separation of at least one type of polymer is mounted in an extrusion line, in a second mechanical processing part processing the molten mixture with use of the melt filter, and wherein the sterilizer is configured to allow the collection container to be supplied only with sterilized unfiltered polymeric material (not passing through the filter element of the melt filter).

Typically, the first mechanical processing part is provided with:
- the pre-processing unit, having an opening for introduction of the products composed of several materials, the pre-processing unit including a size-reduction section provided with a shredding apparatus, allowing to obtain size-reduced parts from the products without chemical action;
- the one or more heating elements heating the at least the plastic materials contained in the size-reduced parts/pieces, in order to obtain the molten mixture;
- an output section, including a melting chamber and the one or more heating elements, and configured to supply the molten mixture to a first inlet of the separation equipment, which is arranged outside the first mechanical part.

In typical embodiments, the installation includes the second mechanical processing part, which is provided with:
- the extrusion line through which the molten mixture coming from the output is circulated;
- the separation equipment mounted on the extrusion line and provided with a melt filter, the extrusion line being in communication with the collection container.

The second mechanical processing part may comprise distinct flow paths with:
- a first flow path, upstream a filter element of the melt filter and arranged downstream the output, through which an unfiltered portion of the molten mixture (retained by the melt filter and containing at least one amongst the first polymer and the second polymer) can flow to exit the extrusion line, the first flow path allowing communication with the collection container,
- and a second flow path that belongs to the extrusion line, downstream the filter element of the melt filter, through which a filtered portion of the molten mixture, passing through the filter element of the melt filter, can flow.

Of course, the melt filter of the separation equipment may form a filtration stage adapted to selectively separate from the molten mixture at least one of the two types of plastics belonging to the products. Since the one or more heating elements are part of the sterilizer to sterilize the molten mixture, the collection container can receive only sterilized unfiltered polymeric material. Preferably, different polymers are selectively separated, based on particular viscosity (not sufficiently low) collected in separate collection containers, each associated with a flow path corresponding to an exit upstream a filter element (of a melt filter) than is permeable only for the less viscous polymers.

Advantageously, the invention is based on the separation of plastic mixtures and polymer composites from one another based of the different melt viscosities of the individual components, i.e., the different plastic qualities. In this regard, several types of plastic still mixed with each other may be separated from the molten part of the material mixture, or only one respective type of plastic (single type) may be separated. The material mixture may also comprise, for example, composite materials, for example composite fibers such as GFK.

Polymers of high quality, used in healthcare field or the like thus can be retrieved, without sorting or dismantling the complex products including such polymers. The mechanical processing parts prevents altering chemical structure of the polymers that are high-valuable products. No chemical processing is performed to change the polymers that are collected/recycled.

In some options, the installation is provided with filtration stages arranged in series, each filter stage being adapted to separate the molten and unmolten or higher viscosity parts of the material mixture of plastics retrieved for the pre-processing unit, in a determined viscosity range.

### BRIEF DESCRIPTION OF THE DRAWINGS

The figures of the drawings are now briefly described.
Fig. 1 shows an exemplary recycling installation in accordance with an embodiment for implementation of a method of separating and retrieving polymers present in a group of same products of heterogenous plastic composition.
Fig. 2 schematically illustrates result of a first mechanical treatment, through which size-reduces parts from a given type of product, such as pouch, are obtained.
Fig. 3 shows an exemplary filtration stage allowing collecting an unfiltered portion essentially containing a given type of polymer or only containing this type of polymer, which can be reused for widespread applications.
Fig. 4 shows an exemplary filtration stage allowing collecting an unfiltered portion essentially consisting in a blend of two polymers, which can be reused for new applications.

### MORE DETAILED DESCRIPTION

A detailed description of several embodiments of the invention is provided below, accompanied with examples and with reference to the drawings.

In the various figures, the same references are used to designate identical or similar elements. Some size or thickness may be exaggerated for the purpose of better illustration.

The embodiments described provide examples and should not be interpreted as limiting the scope of the invention. Features from one embodiment or aspect may be combined with features from any other embodiment or aspect in any appropriate combination. For example, any individual or collective features of method aspects or embodiments may be applied to apparatus, product or component aspects or embodiments and vice versa.

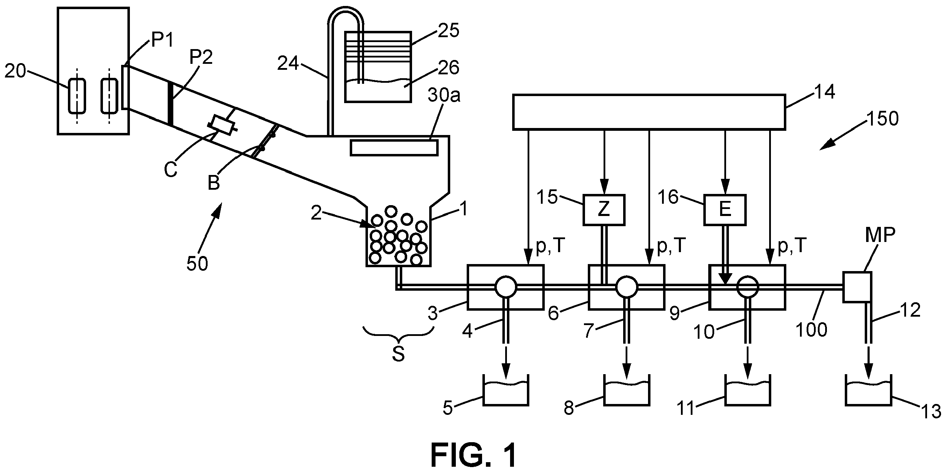

Referring to Fig. 1, it can be seen different types of plastic belonging to same products 20 can be separated from or into a material mixture, which gathers a plurality of relatively small pieces 2, preferably plastic pieces. The products 20 may be same solid products already used for biopharmaceutical applications. Such products 20, which may be filters, complex bags or other devices involved in fluid communication or fluid storage, are contaminated due to contact with a biopharmaceutical fluid. Each of the products 20 is composed of several materials.

The material mixture is fed, for example into a storage container 1. An extruder may be provided in communication with an outlet of the storage container 1, so that plastic material can be supplied to the extruder. Referring to Fig. 1, the extruder is schematically represented with linear sections, each corresponding to a barrel part of the extrusion line. Screw(s) are not illustrated. One or more filter stages 3, 6, 9 are provided along such line.

The material mixture may be already heated or not. In some options, an IR sterilization heater or similar heating element 30a is provided, acting as a sterilizing means. The method involves a heating with sterilizing effect, while also obtaining a molten portion of the material mixture. One or more melt filters can be used to separate each an unfiltered part, which is typically including the plastic(s) of higher viscosity. For allowing such separation, each of the products 20 preferably has two types of plastics that consist of a first polymer and a second polymer, each melt-flowable.

In some embodiments, a part of the pre-processing unit 50 may form an autoclaving part/sterilizer, possibly without an IR source. An exemplary installation will be described in greater detail below, with a first mechanical processing part and a second mechanical processing part. The first mechanical part is suitable to convert raw products into a molten portion including different plastics from the products that are supplied, typically without requiring any prior disassembling. The molten portion may be supplied directly to the second mechanical part for separation of polymers, using one or more filtration stages 3, 6, 9, 21, 109, with melt filters.

### Pre-processi ng

As illustrated in Fig. 1, the plurality of products 20 may be supplied to a pre-processing unit 50, typically adapted for performing a shredding. Here, the pre-processing unit 50 includes a transfer passage, which extends between two doors to closure members P1, P2. In such embodiment, there are suitable mechanical parts arranged downstream relative to the closure members P1, P2, to perform size reduction. The size-reduced parts 2 may be obtained from the products 20 and stored in the storage container 1 without any addition of chemical additives and without any chemical transformation of the plastics.

The material mixture including the size-reduced parts 2 is melted, for example by heating the storage container 1 or a part of the extruder downstream. Optionally, the pre-processing unit 50 is provided with a system for maintaining at least one door P1; P2 closed, thus preventing any smoke generated in a melting chamber (or in a part of the extruder) to circulate toward an inlet access for introduction of the products 20 in the unit 50. For instance, when one door P2 is opened, the other door P1 is closed, and smoke generated in the storage container is prevented from flowing back.

In the illustrated example, the pre-processing unit 50 has a size-reduction section provided with one or more parts B, C forming a shredding apparatus for shredding the products 20 introduced through an opening for access to an interior volume of the shredding apparatus. The shredding apparatus may be designed in many various manners, allowing to obtain size-reduced parts 2 from the products without any chemical action. The interior volume may be entirely closed when performing the shredding, before opening an access to the storage container 1. Alternatively, the interior volume can communicate with an inner space of the storage container 1, when shredding is performed, for allowing continuous feeding of size-reduced parts 2.

The pre-processing unit 50 can have, in the interior volume, a conveying passage optionally provided with a roll crusher B or similar grinding device, located near the storage container 1. The conveying passage may be provided with a cutting member C adapted to shred the products 20. The cutting member C may extend here between the second sealing door body P2 and the storage container 1 (possibly upstream the roll crusher B). Such parts B, C are useful to cut off an outer plastic bag or any annular wall belonging to the products. This improves size-reduction to obtain minute size-reduced parts 2.

The pre-processing unit 50 has or is connected to an output section S adjacent to the storage container 1. In preferred embodiments, a melting chamber is associated to one or more heating elements and belongs to the output section S, so that the output section S easily supplies a molten portion of mixed plastics to a first inlet of the separation equipment, which may be an inlet of an extruder.

Thanks to the heater(s) action in the first mechanical processing part, the subsequent processing is performed more conveniently, the heating being more efficient for quickly sterilizing plastic parts. This is of interest when recycling unfiltered parts that have be heated only once, without crossing any filter stage 3, 6, 9 in the second mechanical processing part.

Possibly, metal particles from special pieces (in outer or inner structure, stirring parts...), belonging to the products may be separated in the pre-processing part, using magnetic attraction before any specific heating. More generally, it is obtained a mixture of thermoplastic polymers that is a flowable mixture. Early collection in the process of ferrous and non-ferrous metal can be performed, for instance using magnetic separators and/or Eddy current separators ECS. The plastics may be flowable solid particles after a shredding stage.

In some options, the first mechanical processing part of the installation is provided with means for feeding the flowable mixture (typically not molten) under pressure to a first screening station (using a first screen), a second screening station (using a second screen) and optionally a third screening station (using a third screen) positioned in series. Each station comprises at least one filter or screen for separation of the sufficiently small solid particles.

In some embodiments, after a shredding stage, the size of the plastic particles may be reduced to below 1 or 2 mm for 50% or at least 50% of the plastic particles present in the mixture. Possibly, the size-reduction may be performed to obtain at least 50% of the particle below 500 microns (maximum diameter or similar characterizing size). After such kind of filtration of the shredded particles, in some options, 90% or more, possibly all the plastic particles, have been reduced below such kind of threshold.

Having such flowable mixture with low average particle size may be of interest to optimize the feeding and then the filtration steps using melt filter(s). The installation illustrated in Fig. 1 corresponds to an option with the shredding performed before obtaining a moltened state of the materials to be separated.

In variants, heating may start when subjecting the products 20, 20' before collecting the size-reduced parts 2. In some options, a heating is performed for all or parts of the materials. Possibly, after separation of small flowable particles is performed, heating may be performed at least for the shredded parts or similarly reduced-size parts that are above a size threshold. A second shredding stage may be provided for processing such parts above a size threshold, with or without requiring a heating upstream the storage container 1.

### Heating of the mixture

Heating may be performed in the second mechanical part and in the first mechanical processing part as well, the heating providing a sterilizing effect at least for separated polymers respectively retained by a melt filter in a filtration stage 3, 6, 9, 21, 109. Such biological decontamination (sterilization) is required due to the fact that some compounds have been introduced inside the products 20, 20'. A simple washing, even using warm liquid water, is generally not considered sufficient for a sterilizing effect.

Heating performed in the pre-processing unit 50 may be of interest to vaporize some liquids remaining in the products 20, 20'. Hollow spaces or internal chambers are delimited by the products 20, 20' and/or there are dead volumes, in which a fluid (biopharmaceutical fluid) remains. Optionally, vaporization of the remaining fluid is obtained at a section of the pre-processing unit 50, which is a sterilizer. Possibly, water or some liquids may be vaporized at a heating step performed inside a melting chamber or upstream the container 1 in the pre-processing unit 50.

A vent 24 may be provided for extracting gas/vapors (away from the container 1 and away from the opening with the door(s) P1, P2). In some options, the vent 24 may be in fluid communication with a purification device 25 for purifying air, typically with a neutralizing stage treating odors. The purification device 25 may have a closed container delimiting a treatment chamber. The container is filled with a treating liquid 26 and provided with at least one conveying duct for conveying the gas flow in the vicinity of a surface of the treating liquid 26 or directly inside the treating liquid. Spraying means may also be provided for spraying droplets, inside the treatment chamber, so that any fraction of remaining polluting components circulating with gas flow leaving the treatment chamber (via an appropriate outlet) is impacted by the droplets. Such droplets may correspond to an aqueous solution with disinfectants, possibly with same composition as the treating liquid, using a suitable pressurizing circuit. Fig. 1 shows an on exemplary embodiment with such device 25.

More generally, at least one purification device 25 for gas treatment may be connected to a respective vent 24 arranged in the first mechanical processing part. Also, another purification device may be provided for gas escaping from the extrusion line and/or escaping from other parts of the second mechanical processing part. Typically, gas escaping is not due to any chemical transformation of the polymers but corresponds to compounds of the biopharmaceutical fluid small amount remaining in some dead volumes of the products 20, 20'.

Regarding the heating in the second mechanical part, heaters with heat exchange surfaces may be provided to ensure the molten portion remains sufficiently fluid despite viscosity of some polymers contained in the mixture obtained from the first mechanical processing part. Such heat exchange surfaces may be distributed at different areas along an extrusion line. It is understood that the material mixture is melted from the size-reduced parts 2 at least before the first melt filter, for instance in part of the extrusion line upstream the first filtration stage.

A control of the heating may be performed, using one or more control units 14. A control unit may be associated to the heating by the element 30a and to the cutting and/or crushing parts B, C of the shredding apparatus. Another control unit may be associated to heating in filtration chambers and/or homogenizing unit(s) provided in the separation equipment downstream the pre-processing unit 50.

### Exemplary products whose plastics are processed

In some options, the products 20 may be filters involved in biopharmaceutical applications, for instance healthcare filters which are designed to be mechanically or physically recyclable. Such filters may include rigid plastic materials, and cellulose acetate (membrane of cellulose acetate) or similar fibers suitable for water filtration.

A filter is typically composed of at least the combination of fleeces and membranes a cage, a core and is sometimes encapsulated in a closed cartridge. Such cartridge is provided with an inlet and an outlet, possibly forming barbed nozzles or similar male connectors. This cartridge is also provided with gaskets for ensuring sealing. Polymers included in the filters, are suitable for air or liquid sterilizing filtration, pre-use sterilization and integrity testing. They may also be compatible with a melting step. The table below shows polymers that belong to a given family of filters.

| **Component** | **Material selected among** |
|---|---|
| drain fleece | PP or PET If gamma irradiated |
| prefilter membrane | Polysulfon, Cellulose acetate, Polyamide, PTFE, PP, GF (Glassfiber) |
| main filter membrane | Polysulfon, Cellulose acetate, Polyamide, PTFE, PP, GF (Glassfiber) |
| inner layer drain fleece | PP, PET If gamma irradiated |
| inner core | PP |
| order cage | PP |
| cap | PP |
| gaskets for adapter | Silicone, EPDM or Viton |
| adapter 25/29 | PP (typically with PSU core) |
| S-shape output | PP |

Of course, such list of constituents is non-limiting example. Regarding some connecting parts or sealing connection devices, thermoplastics such as polyolefins, polypropylene, polyethylene, polyoxymethylene (POM), polyvinylidene fluoride (PVDF), polytetrafluoroethylene (PTFE), polyamide, polysulfon, polyester, polycarbonate, and glass filled thermoplastics may be used. At least one connecting part of the products 20, 20' may also be made from or include thermosets such as epoxies, phenolics, silicone, copolymers of silicone and novolacs. Other suitable materials may include cyanate ester, polyurethanes, and urethane methacrylate.

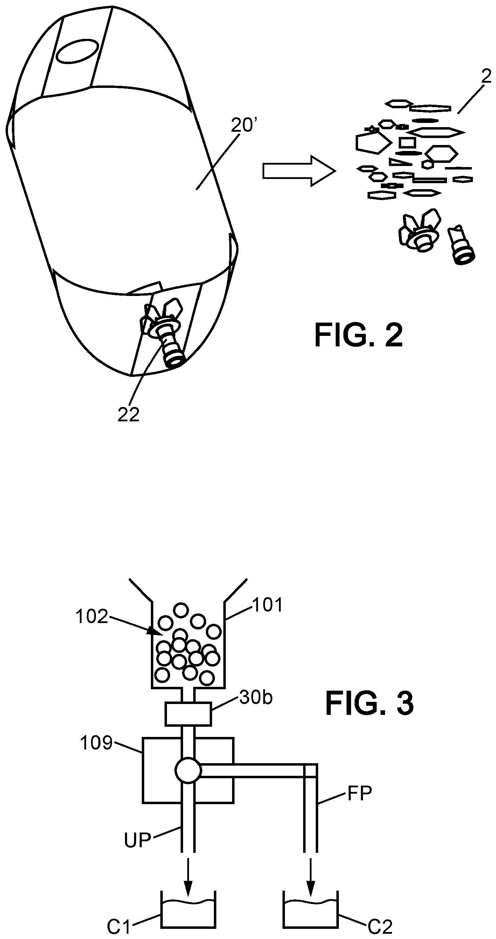

Referring to Fig. 2, the products 20' may be flexible pouches, with or without inner components such as stirring device, inner membrane or the like. Such pouches are able to delimit a hermetically closed volume. The pouch-like products 20' may contain a multilayer film, typically containing a structural layer distinct from the inner layer, not using same polymer.

The parts B, C of the shredding apparatus are adapted to quickly cut films of the pouches. The products 20' may be provided in a flat state, i.e. with interior volume thereof empty or almost empty. Referring to Fig. 2, the pouch or bioreactors forming the product 20', shown in an expanded state for purpose of illustration, may thus be flattened/collapsed before introduction in an entry of the pre-processing unit 50, to be then subjected to size-reduction. Besides, Fig. 2 may be considered as illustrating an option with only a cutting step, without any crushing. The crushing may be performed directly after the cutting or a separation step may be provided to separate metal parts or other non-plastic pieces that are not valuable by a processing with melt filters. Alternatively, such separation step for non-plastic materials may be performed before feeding the storage container 1 or possibly in a non-plastic separation section formed as a transition device arranged between the pre-processing unit 50 and the extrusion line provided with the filtration stages 3, 6, 9, 21, 109.

The products 20' may include rigid driving parts or other rigid parts, for instance located at two opposite axial ends of the products 20' once they are elongated. Products 20 such as filters may also have rigid flanges, annular ends, or similar rigid parts at two opposite axial ends.

A channel of the pre-processing unit 50 may be sized and shaped according to the typical geometry of the products 20, 20', in order to facilitate a shredding step, typically associated with a crushing before and/or after a cutting step, performed in such channel.

More generally, the products 20, 20' to be processed in the pre-processing unit 50 are products of heterogenous composition, belonging to a same product family, the product composition being precisely known in advance, except the contaminants that are non-plastic material (biopharmaceutical fluid/liquid content at room temperature).

The products mays contain PP as one of the three main constituents. PP has excellent chemical resistance, which is of interest to withstand a heating, possibly using an extruder. The method may be performed without requiring any acid agent and typically without reactive agent chemically modifying the two or three main polymer constituents of the products 20, 20'.

In some options, the plastics of the products are made of polymers having an average molecular weight inferior or equal to 200000 (g/mol).

### Use of a melt filter for separation of individual types of polymers

The method of separating plastics from the products 20, 20' may use an extrusion line through which the molten mixture, coming from the first mechanical processing part output, is circulated. The separation equipment thus includes an extrusion line combined with one or more filtration stages 3, 6, 9, 21, 109 and respective collection containers for each polymer or blend of two polymers that can separated based on a parameter representative of the melt viscosity.

Referring to Figs 1, 3 or 4, the separation stages involved in the method can each allow separation of a melt of a given polymer substance, with the polymer being separated, for example, on the upstream side of a filtration zone/filter element through which a mass of lower viscosity passes. In exemplary case of Fig. 1, this is done with a cascade filtration.

Regarding options where the products include non-plastic materials, not melt-flowable, the first mechanical processing part may be configured to retain such non-plastic materials upstream of any separation/filtering element that is permeable to and/or provided with openings for molten plastic.

In some options, fibrous or other flowable non-plastic material at high temperatures superior to about 130°C may be included in the molten portion and separated based on a parameter representative of the melt viscosity.

Advantageously, commercially available melt filters or filter cascades composed thereof, such as those used in the plastics processing industry, for example in extrusion plants, may be used. For example, continuous screen changers or high-performance melt filters of the type ERF 200, 350, 500 can be used. Such melt filters are used to separate solids such as paper, metal or similar materials from the melt.

Various types of plastic can be distinguished by their specific melt viscosity. This property can be advantageously used for the recycling of pure plastics. Single or multiple types of plastic that are still mixed with each other can be separated. Alternatively, or simultaneously, non-plastic fractions can be separated.

The separation equipment is mounted on the extrusion line and comprises one or more melt filters distributed in the filtration stages 3, 6, 9, 21, 109. At least one of these filtration stages is designed as a melt filter with a corresponding viscosity limit value. The polymers of the products 20, 20' have such a difference in properties, especially difference in melting temperatures and/or that a given polymer of these products can be selectively retrieved by being retained downstream a corresponding melt filter whose viscosity limit value prevent this given polymer, comparatively more viscous, from flowing with the molten part that joins the upstream side if this melt filter.

Typically, the parts remaining in the molten part after the last filtration stage 9, 109, here downstream the last melt filter, may be delivered as a waste stream 12 to a collection container 13 or C2. Such remaining parts may contain degraded components and polymers of low viscosity

The melt filter will not be described in detail here, the design of the filter device being not limited. In each filtration stage 3, 6, 9, 21, 109, the filter device may be a melt filter including at least one flow-path which extends from an inlet to an outlet side of the filter device. Typically, the melt filter is provided with a filter element within a filter chamber for the removal of less flowable material from the flow of plastic material (mixture) fed along said flow-path.

The filter element may be of the continuous screen type to define a filtering area or a set of filtering areas across the flow path for the mixture. Scraping means may be also provided, with such scraping means actuated if the pressure of the molten plastic exceeds a certain value.

In some embodiments, the filtering areas are successively advanced across the flow path for the plastic material, within the filter device. A piston or a rotating scraper may be associated to such flow path. For instance, a perforated head piston member can be reciprocated along a longitudinal axis into the chamber of the filter device, possibly for facilitating replacement of a clogged area. In a forward position, such perforated head piston member can sealingly clamp the filter element against a perforated back-plate to allow the molten plastic material to flow towards an outlet port, while in a backward or retracted position, the perforated head piston disengages the filter element for the replacement of a clogged area with a fresh one, preventing the communication between the inlet and the outlet side of the flow path.

### First exemplary embodiment with several filters

Referring to Fig. 1, the molten material mixture from the size-reduced parts 2 (which may be all melted in preferred options) is fed to the separation equipment, here to a filter cascade comprising a first filtration stage 3, a second filtration stage 6 and a third filtration stage 9. The parameters set for the respective filtration stages are different, typically with decreased temperature and or decreased pressure along the filter cascade, even if temperature may be locally increased in extrusion line section between such stages, for purpose of homogenizing the molten portion.

At least one melt pump may be provided, with a melt pump MP typically arranged downstream the third filtration stage 9. In some options, only one melt pump MP may be used in the separation equipment.

At stage 3, there is a first melt filter with a first viscosity limit having a specific value. The first viscosity limit is a relatively high viscosity limit, i.e. high viscosity fractions are separated from the melt in the first filtration stage 3. For example, a first type of plastic 4 is separated and fed to a collection container 5. Such first type of plastic may be the polymer having the higher molecular weight in average, as compared to the other polymers contained in the size-reduces parts 2.

The second filtration stage 6 is designed as a melt filter with a second viscosity limit value which, for example, may be lower than the first viscosity limit value. A second type of plastic 7 is separated in the second filter stage 6, which is fed to a collecting container 8. This is typically a second polymer, which may be of lower molecular weight than the first polymer. At least one amongst the first and the second polymers may be a polyolefin.

The third filtration stage 9 is designed as a melt filter with a third viscosity limit value which, for example, may be lower than the second viscosity limit value. A third type of plastic 10 is separated in the third filter stage 9, which is fed to a collection container 11. The third type of plastic may have a lower molecular weight than any one of amongst the first and second types of plastic.

In some options, one amongst the three polymers is a condensation polymer (i.e. a polymer obtained by condensation reaction, like PA for instance). Additionally, one amongst the separated polymers, collected in one of the collection containers, is cellulose acetate, EVA or EVOH.

In this non-limiting example, a waste stream 12 is provided after the third filter stage 9. Of course, such waste stream may also be arranged differently, for instance without directly reaching a last collection container 13 if at least a fourth polymer or a blend of polymer can be still recycled.

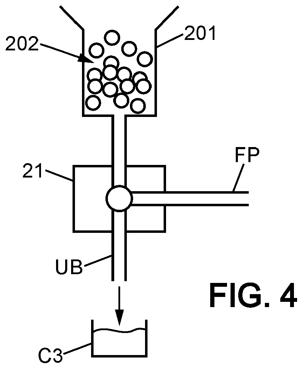

Still referring to Fig. 1, it is schematically illustrated a control unit 14 functionally coupled to the second mechanical processing part, here for controlling parameters such as local pressure and temperature in chambers of the melt filters. Of course, such kind of control unit 14 may be used with any other equipment of separation, such as described in Fig. 3 or 4, for similar purpose.

The control unit 14 may control and/or regulate the local pressure and temperature conditions in each filtration stage 3, 6, 9 based on pressure signals p and temperature signals T. Suitable sensors may be located at each of the filtration stages 3, 6, 9. In addition, a further substance may be optionally added to the molten portion of the material mixture. This is here illustrated by the second filtration stage 6. In the second filtration stage 6, an additional substance Z is added to the melt stream from a vessel 15, for instance using an actuator associated to an injection line in communication with the flow path section upstream the filter element of the second filtration stage 6. The optional addition, i.e. the time of such addition and the amount of addition of the additional substance Z, can be controlled or regulated by the control unit 14.

In some embodiments, the melt viscosity of the molten portion of the material mixture or at least one type of plastic contained therein can be increased by using additives, preferably without causing any chemical reaction altering integrity of the polymers to be retrieved.

Energy supply E can be influenced in a specific way. Referring to Fig. 1, the energy supply may be provided by an energy source 16, which may be controlled or regulated by the control unit 14. While such energy source is shown in association with the third filtration stage 9, it is understood that such way of supplying energy (mechanical or electromagnetic energy/heat) may be implemented at ant suitable stage.

By generating suitable temperature profiles in combination with such a melt filter cascade, which may consist of several continuously operating filter stages connected in series, such material mixtures (with the polymers initially contained in the size-reduced parts 2) can be separated into individual components, i.e. the respective pure plastic types. The melt viscosities of the individual material components to be separated can be specifically adjusted by means of temperature control and additional local coupling of thermal, mechanical or electromagnetic energy.

During extrusion, the pressures upstream of the respective filtration stages 3, 6, 9 can also be adjusted and other substances can be added to specifically and selectively influence the melt viscosity of the different types of plastic, in order to support such a separation and filtration process based on the viscosity differences.

With such an approach, complex composite materials, such as composite films, blended fabrics or composite materials, can therefore also be separated into individual plastic types and/or the fibers of the composite material can be removed. This is of interest for recycling single-use filters or pouches/bioreactors for biopharmaceutical fluid, typically because:
- the filters generally have fibrous materials or membranes integrated inside a rigid structure made of different plastics;
- the pouches or bioprocessing reactors (bioreactors having a pouch/flexible housing, as in products 20' illustrated in Fig. 2 for instance) generally delimit an interior volume with an inner layer that belongs to composite film, whose external and/or intermediate layer(s) may be different from the inner layer.

### Second exemplary embodiment

Now referring to Fig. 3, it is illustrated all or part of a separation equipment mounted downstream the pre-processing unit 50. Here a heating element 30b is provided, optionally between a storage container 101 and interior of the melting chamber of the filtration stage 109. The storage container 101 may be included in the pre-processing unit 50, containing discrete size-reduced parts 102 or a mixture of plastics that have been collected after at least one filtering step using a screen. In a variant, the storage container 101 may be fed with a mix of plastics having already be processed in an extrusion line, separated as unfiltered part of a melt filter and possibly cooled and then cut and/or crushed after cooling.

In this embodiment, at least one material belonging to the products 20, 20' and collected in the storage container 101 remains unmolten, while the other materials from this same container 101 are processed in a molten state and reach a downward area of a given filter, here a melt filter forming the filtration stage 109. The unmolten part UP is retrieved and may only include a same type of plastic chosen amongst some types of plastics to be recycled.

In preferred embodiments, due to the heating typically above or significantly above 121°C, here by the heating element 30b, the polymer composing the unmolten part is sterilized.

Typically, temperature may be raised, possibly before the given filter or at a later stage, so that all or part of the other materials in the filtered part FP are degraded. In such illustrated example, the filtered part FP, possibly considered as a waste stream, may be collected in a last container C2.

In some options, a change of the chemical properties occurs for two or more of the other materials having a lower viscosity as compared to the unfiltered/separated material. The material that remains unmolten, i.e. the unfiltered part UP, can be separated upstream from a filter element of the given filter, so that it is collected in container C1 as a selectively recycled polymer.

When the products contain several polymers, for instance with at least three distinct polymers that are valuable and having significantly distinct molecular weights, the filtration stage 109 processed with a heating that degrades some polymers may be provided after other filtration stages, which are for instance one or more of the stages 3, 6 shown in Fig. 1. The filtration stages 9 and 109 may thus be similar in some options. The storage container 101 may optionally be removed if the filtration stage 109 is mounted to be at the end of cascade filtration.

### Third exemplary embodiment

Now referring to Fig. 4, it is illustrated a part of a separation equipment mounted downstream the pre-processing unit 50. A storage container 201 may be included in the pre-processing unit 50 and may contain discrete size-reduced parts 202 or a mixture of plastics that have been collected after at least one filtering step using a screen. In a variant, the storage container 201 may be fed with a mix of plastics having already be processed in an extrusion line, separated as unfiltered part of a melt filter and possibly cooled and then cut and/or crushed after cooling.

In this embodiment, at least two of the plastic materials belonging to the products 20, 20' cannot be filtered in a same filtration step. Then, the mix of the unfiltered materials is characterized as a blend (unfiltered blend UB) for further use in new application(s). The unfiltered blend may be separated upstream the filtration stage 21 at the filtration step, and recycled, being collected in container C3 as a selectively recycled polymer. In some options, depending on the properties of the other materials remaining in the molten part forming the filtered part FP, one or more further separation steps, using melt filters for instance, may be performed.

Treatment of such filtered part FP is not shown but can be similar to what is shown in Fig. 1, if one or more types of valuable plastic contained in the molten portion can be separated based on a difference of melt viscosity. In some options, any of the filtration stages 3, 6, 9, 109 can be processed to separate an unfiltered blend, as in the case of Fig. 4. As in the other embodiments, the blend of two polymers received in the container C3 is already sterilized, due to heating conditions.

According to an advantageous embodiment of the invention, it is provided that the extrusion line comprises a metal tubular part delimiting the respective flow paths for the molten materials. The individual filter stages are arranged in a filter cascade on the extrusion line and may each have a filtration chamber delimited by metal walls. Use of such extrusion line enables a simple and cost-effective implementation of a recycling plant.

The viscosity ranges of the individual filter stages may differ from one another. In particular, each filter stage may have its own viscosity limit, different from that of the other filter stages, which represents a limit value for the melt viscosity of the components to be filtered. Advantageously, the cutting/shredding level and the level of the heating are controlled to remain below a threshold that degrades polymer properties.

With the method of the disclosure, plastic mixtures that were not previously economically separable can be separated by a combination of melt filter cascades with appropriately designed and filter stages (typically continuously operating filter stages) as well as gradual temperature profiles and, if necessary, additional local energy coupling, different pressures, additional supply of viscosity modifying substances. Separation can be performed economically and efficiently (essentially with a mechanical separation) into different material components/types of plastic, which may be fed into higher value recycling.

In addition, separation of non-plastic components is possible for composite materials, e.g. separation of short-fiber materials such as glass, carbon, cellulose and natural fibers.

Compared to previous recycling approaches, the present installation and associated method provide a robust industrial process for the cost-effective separation and recycling of material blends and material composites with high plastic content. The separation of non-meltable components, such as fillers, reinforcing fibers or cotton in a blended fabric and the recycling of individual components are also possible with this kind of separation. In addition, it is also permitted subsequent use of minor components of a plastic blend or composite material for which economic separation was not previously possible.

The choice of the products 20, 20' may correspond to a selection step in view of the specific plastics contained therein, with knowledge that the particulars of the composition of the products 20, 20', the decontamination efficiency and the recycling options based on melt viscosity of the polymers in the molten potion of the mixture of plastics are combined according to the described method.

Of course, the invention is not limited to the embodiments described above and provided only as examples. It encompasses the various modifications, alternative forms, and other variants conceivable to a skilled person within the context of the invention, and in particular any combinations of the various modes of operation described above, which may be taken separately or in combination.

For instance, the products 20, 20' have been described as containing a multilayer film and/or a filtration media composed of several layers. In some variants, the products may be deprived from any composite film or media, while containing different types of plastic, with typically at least one plastic that is more viscous or more difficult to be melt as compared to the other plastics. Typically, the products 20, 20' have same heterogenous composition, preferably with at least three polymers, without having more than two distinct materials consisting of or including a mineral.

Also, difference in melting temperatures may be used for at least a separation stage, using a melt filter. For instance, only the more flowable/efficiently molten polymer may reach an outer area extending around a tubular screen of the melt filter, while the other polymer remains in an inner central channel delimited by the tubular screen, while being still displaced thanks to a screw of an extrude or similar suitable pushing part. Such separation may be possibly used for a last polymer to be retrieved, after other filtration stages 3, 6, 9.

## Claims

1. A method of separating different types of plastics (4, 7, 10; UP; UB) from a plurality of products of heterogenous composition, the products (20; 20') having different types of plastics distributed in several product pieces assembled together in each of the products, the method comprising:
- supplying the plurality of products (20; 20') to a pre-processing unit (50), with each of the products (20; 20') composed of several materials, the plurality of products being solid products contaminated due to contact with a biopharmaceutical fluid, each of the products (20; 20') having two types of plastics that consist of a first polymer and a second polymer, each melt-flowable;
- in the pre-processing unit (50), subjecting the products (20; 20') to size reduction, to obtain size-reduced parts (2);
- heating at least the plastic materials contained in the size-reduced parts to obtain a molten mixture including the two types of plastics, the heating starting before, during and/or after the size-reduction;
wherein the two types of plastics have specific melt viscosities and/or melting temperatures that are different,
wherein after the size-reduction, the method comprises:
- supplying the molten mixture to a separation equipment;
- selectively separating from the molten mixture at least one of the two types of plastics, by using a melt filter included in the separation equipment;
and wherein an unfiltered portion retained by the melt filter, containing at least one of the two types of plastics, is sterilized, preferably due to said heating, and collected in a collection container (5, 8, 11).

2. The method according to claim 1, wherein the separation equipment is provided with an extrusion line, and wherein only one of the two types of plastics (4) is retained in a first unfiltered molten portion, by using a first melt filter of the separation equipment, the collection container being a first collection container (5) for collecting the first unfiltered molten portion.

3. The method according to claim 1 or 2, wherein after the size-reduction, the method comprises:
- selectively separating from the molten mixture the two types of plastics, using melt filters of the separation equipment to firstly separate the first polymer (4) and then separate the second polymer (7), with the first polymer (4) and the second polymer (7) being sterilized.

4. The method according to claim 1, wherein the products are plastic products each containing the first polymer (4), the second polymer (7) and a third polymer (10), and wherein all the plastics contained in the products (20; 20') have been selected to have different melting temperatures and/or different melt viscosities, and wherein at least three melt filters of the separation equipment allow separating, by a mechanical process using a melting temperature differential or melt viscosity differential between the different plastics, the first polymer (4), the second polymer (7) and the third polymer (10).

5. The method according to claim 4, wherein the third polymer (10) is of lower melt viscosity than the first polymer (4) and the second polymer (7), the third polymer (10) being separated after separating the second polymer (7).

6. The method according to any one of the preceding claims, wherein the products (20; 20') are such that there is a melting temperature difference of at least 15°C between any of the different types of plastics present in the products (20; 20') and/or there is a difference in average molecular weight of at least 2000 g/mol between any of the different types of plastics present in the products (20; 20').

7. The method according to any one of the preceding claims, wherein the plurality of products (20; 20') that are supplied to the pre-processing unit (50) are assembled products with no part thereof removed before the subjecting to size reduction.

8. The method according to any one of the preceding claims, wherein the first polymer (4) has higher melt viscosity than any one of the other plastics contained in the molten mixture,
and wherein the molten mixture obtained by the heating is a sterilized mixture.

9. The method according to any one of the preceding claims, wherein temperature is set equal or above a sterilization threshold, in an extrusion equipment, for at least one amongst the first polymer (4) and the second polymer (7).

10. The method according to any one of the preceding claims, wherein the products (20') include each a multilayer plastic film of same composition, forming a plastic housing, and wherein:
- the first polymer (4) and/or the second polymer (7) are distributed in each of the products (20') to define a layer of the multilayer plastic film.

11. The method according to any one of the preceding claims, wherein each polymer (4, 7, 10, UP) found in composition of the products is selected to:
- 1- fulfill at least one given application specification chosen amongst air or liquid sterilizing filtration, pre-use sterilization and integrity testing; and
- 2- be compatible with separation by a melt filter, while being melt-flowable in an extrusion line.

12. The method according to any one of the preceding claims, wherein a homogenization unit is arranged downstream from a given melt filter chosen amongst the melt filters, and wherein temperature in the homogenization unit is higher than in the given melt filter.

13. The method according to any one of the preceding claims, wherein the products (20; 20') are provided with a plastic housing and include metal or mineral parts arranged inside the plastic housing, and wherein, the method further comprises:
- in the pre-processing unit (50), shredding plastic parts of the plastic housing, so that the metal or mineral pieces can be collected separately from the shredded plastic parts; and
- removing of metal or mineral parts by magnetic separation, preferably before obtaining the sterilized molten mixture.

14. The method according to claim 1, wherein the separation equipment is provided with an extrusion line, and wherein the two types of plastics are forming a blend in a first unfiltered molten portion, by using a first melt filter of the separation equipment.

15. Installation for implementation of the method according to any one of claims 1 to 14, the installation comprising a first mechanical processing part, provided with:
- the pre-processing unit (50), having an opening for introduction of the products (20; 20') composed of several materials, the pre-processing unit (50) including a size-reduction section provided with a shredding apparatus (B, C), allowing to obtain size-reduced parts (2) from the products (20; 20') without chemical action;
- an output section (S), including a melting chamber and one or more heating elements, and configured to supply the molten mixture to a first inlet of the separation equipment, which is arranged outside the first mechanical part, the one or more heating elements heating the plastic materials contained in the size-reduced parts (2), in order to obtain the molten mixture;
the installation further comprising a second mechanical processing part provided with:
- an extrusion line through which the molten mixture coming from the output section (S) is circulated;
- the separation equipment mounted on the extrusion line and provided with a melt filter, the extrusion line being in communication with the collection container (5, 8, 11); wherein the second mechanical processing part comprises distinct flow paths with:
a first flow path, upstream a filter element of the melt filter and arranged downstream the output section, through which an unfiltered portion of the molten mixture retained by the melt filter and containing at least one amongst the first polymer and the second polymer can flow to exit the extrusion line, the first flow path allowing said communication with the collection container,
a second flow path that belongs to the extrusion line, downstream the filter element of the melt filter, through which a filtered portion of the molten mixture, passing through the filter element of the melt filter, can flow,
wherein the melt filter of the separation equipment is forming a filtration stage adapted to selectively separate from the molten mixture at least one of the two types of plastics belonging to the products;
and wherein a sterilizer (30a), preferably including the one or more heaters, is provided to sterilize the molten mixture, whereby the collection container (5, 8, 11) receives only sterilized unfiltered polymeric material.
